Europäisches Patentamt

**European Patent Office**

Office européen des brevets

(11) Veröffentlichungsnummer: **0 207 262**
**B1**

(12) **EUROPÄISCHE PATENTSCHRIFT**

(45) Veröffentlichungstag der Patentschrift:
**14.12.88**

(21) Anmeldenummer: **86106471.5**

(22) Anmeldetag: **13.05.86**

(51) Int. Cl.⁴: **F 27 D 3/00,** F 27 B 9/26,
F 27 B 9/38

(54) Verfahren und Vorrichtung zum automatischen Entladen von mit Spaltplatten besetzten Ofenwagen.

(30) Priorität: **03.07.85 DE 3523730**

(43) Veröffentlichungstag der Anmeldung:
**07.01.87 Patentblatt 87/2**

(45) Bekanntmachung des Hinweises auf die Patenterteilung:
**14.12.88 Patentblatt 88/50**

(84) Benannte Vertragsstaaten:
**AT BE CH FR GB IT LI NL**

(56) Entgegenhaltungen:
**FR-A-2 318 089**
**US-A-1 474 793**
**US-A-3 749 257**

(73) Patentinhaber: **Hans Lingl Anlagenbau und Verfahrenstechnik GmbH & Co. KG, Albrecht-Berblinger- Strasse 6, D-7910 Neu- Ulm (DE)**

(72) Erfinder: **Schwarz, Josef, Birkenweg 25, D-7917 Vöhringen (DE)**

EP 0 207 262 B1

LIBER, STOCKHOLM 1988

**Beschreibung**

Die Erfindung betrifft ein Verfahren zum Entladen von mit Spaltplatten besetzten Ofenwagen nach dem Brennen gemäß dem Oberbegriff des Anspruches 1. Die Erfindung betrifft ferner eine Vorrichtung zur Durchführung des Verfahrens.

Nach dem Brennen müssen Spaltplatten, die im Reihen- oder im Kreuzbesatz, auf ihren Schmalseiten stehend, auf Ofenwagen gestapelt sind, abgeladen und aus Stabilitätsgründen sowie für die Inspektion zur Sortierung und Verpackung flachliegend weitergefördert werden.

Bekannt ist, auf ihren Schmalseiten stehend gesetzte Platten manuell abzuladen oder diese reihenweise über ihre Schmalseiten abzugreifen, umzusetzen und beim Weitertransport zu kippen.

Manuelles Abladen ist personalaufwendig und führt zu vermehrten Beschädigungen an den Platten. Reihenweises Abgreifen über die Schmalseiten erfordert ausreichende und gleichbleibende Abstände zwischen den Platten zum Einführen der Greifer. Außerdem müssen die Platten auf dem weiterfördernden Gerät aus Stabilitätsgründen zunächst verdichtet werden, wodurch Beschädigungen möglich sind.

Weiterhin wirkt sich beim Abgreifen nachteilig aus, daß Spaltplatten, die fast bis zur völligen Verdichtung gebrannt werden, oft auf ihrer Unterlage kleben und beim Abheben die Unterlage mitreißen.

Der Erfindung liegt daher die Aufgabe zugrunde, auf ihren Schmalseiten stehende Platten nach dem Brennen automatisch vom Ofenwagen so abzuladen, daß Beschädigungen vermieden werden.

Diese Aufgabe wird erfindungsgemäß durch das im kennzeichnenden Teil des Anspruches 1 aufgezeigte Verfahren und die im Anspruch 3 offenbarte Vorrichtung gelöst.

Die mit der Erfindung erzielbaren Vorteile bestehen insbesondere darin, daß die Platten sanft gekippt werden und ein Verkanten und Abbrechen der Platten beim Abladen nicht möglich ist. Ein bestimmter Abstand zwischen den Plattenquerreihen auf dem Wagen ist nicht erforderlich. Auch läßt sich ein Kleben der Platten auf der Unterlage bis zu einem gewissen Grade in Kauf nehmen.

Ausführungsbeispiele der Erfindung sind in der Zeichnung dargestellt und werden im folgenden näher beschrieben.

Es zeigen:

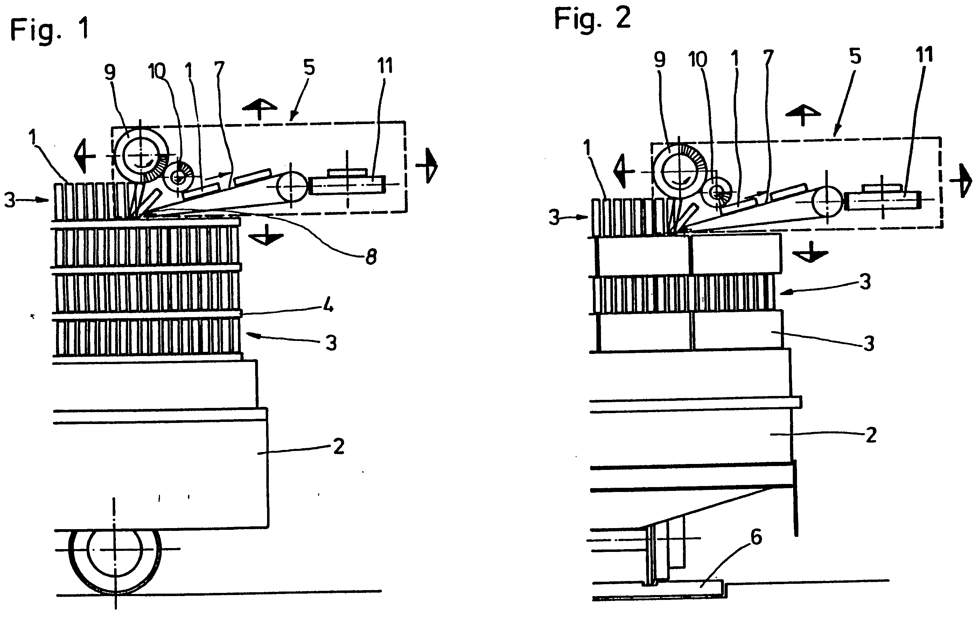

Fig.1 eine Seitenansicht des Ofenwagens mit Spaltplatten im Reihenbesatz während der Entladung,

Fig. 2 eine Endansicht des Ofenwagens mit Kreuzbesatz während der Entladung.

Platten 1, die auf dem Ofenwagen 2 in Reihen 3 auf dazwischenliegenden Unterlagen 4 direkt übereinandergesetzt oder ohne Zwischenlagen 4 im Kreuzverband, bei welchem jede Lage zur zur darunter- und darüberliegenden um 90° verdreht ist, gesetzt sind, werden mit einer horizontal und vertikal Verschiebbaren Einrichtung 5 in Richtung der Reihen 3, beginnend von einer Seite, lagenweise entladen. Im Falle von Reihenbesatz kann anstelle der Einrichtung 5 auch der Ofenwagen 2 horizontal verschoben werden.

Im Falle von Kreuzverband wird nach Beendigung des Entladens einer Lage der Ofenwagen 2 jeweils um 90° auf einer Drehscheibe 6 verdreht, so daß der nächste Entladeschritt wieder in Richtung der Reihen 3 erfolgen kann.

Die Einrichtung 5 weist einen Bändertisch 7 mit einer Umlenkrolle 8 auf, die bei Betrieb unterhalb des Schwerpunktes der an der Breitseite der zu entladenden Platten 1 zu liegen kommt, sowie eine Bürstenrolle 9, die so positioniert ist, daß die jeweils vorderste Platte 1 der Reihen 3 bei Vorschub der Einrichtung 5 in Richtung der Plattenreihe 3 davon erfaßt und gekippt wird und sich auf den Bändertisch 7 auflegt.

Eine Einzugsrolle 10, die ebenfalls als Bürstenrolle ausgeführt sein kann, ist der Bürstenrolle 9 nachgeordnet, um die Platten am Zurückrutschen zu hindern.

Der Bändertisch 7 wird entgegen der Vorschubrichtung der Vorrichtung 5 angetrieben, so daß die darauf abgelegten Platten vom Ofenwagen 2 weg und auf einen Querförderer 11 abgelegt werden, der mit der Einrichtung 5 bewegbar ist, und die Platten zu einer nicht dargestellten Sortier- und Paketiervorrichtung fördert. Der Querförderer 11 ist mit nicht gezeigten Ausrichtorganen ausgerüstet.

Der Bändertisch 7 wird kontinuierlich in Richtung der Plattenreihen vorgeschoben und mit solcher Geschwindigkeit angetrieben, daß die gekippten Platten auf ihm berührungsfrei zu liegen kommen.

**Patentansprüche**

1. Verfahren zum automatischen Abladen von mit Spaltplatten besetzten Ofenwagen, auf denen die Platten reihenweise in Lagen übereinander, auf ihren Schmalseiten stehend, angeordnet sind,
dadurch gekennzeichnet,
daß die Platten der jeweils obersten Lage in Richtung der Reihen, von einer Seite beginnend, einzeln nacheinander abgeladen werden, indem die jeweils vorderste Platte der Reihen an ihrer oberen Schmalseite erfaßt und über die unterhalb des Schwerpunktes an der Breitseite der Platte zu liegen kommende vordere Kante einer Fördereinrichtung gekippt und flach liegend abtransportiert wird.

2. Verfahren nach Anspruch 1,
dadurch gekennzeichnet,
daß die Fördereinrichtung kontinuierlich in Richtung der Plattenreihen vorgeschoben wird und die gekippten Platten mit einer Geschwindigkeit weggefördert werden, daß die Platten berührungsfrei auf ihr zu liegen kommen.

3. Vorrichtung zur Durchführung des Verfahrens nach den Ansprüchen 1 und 2, gekennzeichnet durch einen in Richtung der Plattenreihen (3) vorschiebbaren und höhenverstellbaren Bändertisch (7) mit unterhalb des Schwerpunktes der zu entladenden Platte (1) liegender Umlenkrolle (8) sowie durch eine zusammen mit dem Bändertisch (7) bewegten, die Platte (1) über die Umlenkrolle (8) auf den Bändertisch (7) kippenden Bürstenrolle (9).

4. Vorrichtung nach Anspruch 3, dadurch gekennzeichnet, daß zumindest bei Kreuzbesatz der Ofenwagen (2) auf eine jeweils um 90° sich drehende Drehscheibe (6) gestellt wird.

5. Vorrichtung nach Anspruch 3 und/oder 4, dadurch gekennzeichnet, daß der Bändertisch (7) und die Bürstenrolle (9) an einer in Richtung der Plattenreihen (3) horizontal verschiebbaren und höhenverstellbaren Einrichtung (5) angebracht sind, wobei der Bändertisch (7) entgegen seiner Vorschubrichtung angetrieben wird.

6. Vorrichtung nach einem der Ansprüche 3 bis 5, dadurch gekennzeichnet, daß das Obertrum des Bändertisches (7) in Förderrichtung schräg aufwärts verläuft und der Bürstenrolle (9) eine die Platten (1) gegen das Obertrum drückende Einzugsrolle (10) nachgeordnet ist.

7. Vorrichtung nach Anspruch 6, dadurch gekennzeichnet, daß die Einzugsrolle (10) aus einer Bürstenrolle besteht.

8. Vorrichtung nach Anspruch 3, dadurch gekennzeichnet, daß an den Bändertisch (7) ein mit Ausrichtorganen versehener Querförderer (11) angeschlossen ist.

## Claims

1. A process for the automatic unloading of kiln cars loaded with split tiles on which rows of tiles standing on edge are arranged in successive layers vertically above each other, characterized in that the tiles of each uppermost layer are unloaded individually and succesively in the direction of the rows, starting at one end, in such a manner that the most foreward tile of each row is taken at its upper edge and tipped over the front edge of a conveying device positioned below the centre of gravity on the broadside of the tile and removed in a flat position.

2. A process as claimed in claim 1, characterized in that the said conveying device is continously advanced in the direction of the tile rows and that the tipped tiles are removed at such a speed that they will not contact each other on the said conveying device.

3. A device for carrying out the process claimed in claims 1 and 2, characterized by a belt table (7) which can be advanced in the direction of the tile rows (3) and adjusted in height and which incorporates an idler pulley (8) positioned below the centre of gravity of the tile (1) to be unloaded and by a brush roll (9) which is moved together with the said belt table (7) and which tips the said tile (1) over the said idler pulley (8) on to the said belt table (7).

4. A device as claimed in claim 3, characterized in that at least if loaded in a cruciform setting pattern the kiln car (2) is placed on a turntable (6) which can be indexed in steps of 90° each.

5. A device as claimed in claims 3 and/or 4, characterized in that the said belt table (7) and the said brush roll (9) are secured to a facility (5) which can be shifted horizontally in the direction of the said tile rows (3) and adjusted in height with the said belt table (7) being driven in the direction opposite to that in which it is advanced.

6. A device as claimed in any one of claims 3 to 5, characterized in that the upper strand of the said belt table (7) moves diagonally upward in the conveying direction and that a feed roll (10) pushing the said tiles (1) against the upper strand is arranged after the said brush roll (9).

7. A device as claimed in claim 6, characterized in that the said feed roll (10) consists of a brush roll.

8. A device as claimed in claim 3, characterized in that a transverse conveyor (11) provided with aligning elements is connected to the said belt table (7).

## Revendications

1. Procédé de déchargement automatique de voitures de four chargées de carreaux fendus, voitures sur lesquelles les carreaux sont disposés par rangées en couches superposées, verticalement sur leurs chants, caractérisée en ce que les carreaux de la couche située la plus en haut sont déchargés individuellement l'un après l'autre dans le sens des rangées, à partir d'un côté, le carreau, situé le plus en avant dans les rangées, étant saisi par son chant supérieur, basculant au-delà de l'arête supérieure d'un dispositif de transport, située au-dessous du centre de gravité du côté large du carreau, et étant évacué à plat.

2. Procédé selon la revendication n° 1, caractérisée en ce que le dispositif de transport avance de façon continue dans le sens des rangées et que les carreaux basculés sont évacués à une vitesse telle qu'ils reposent sur celui-ci sans contact.

3. Dispositif pour l'exécution de la méthode selon les revendications n° 1 et 2, caractérisé par une table à bandes (7) déplaçable en avant dans le sens de rangées de carreaux (3) et réglable en hauteur avec galet de renvoi (8) situé au-dessous du centre de gravité du carreau à décharger (1) ainsi que par un rouleau à brosse (9), mû conjointement avec la table à bandes (7) et faisant basculer le carreau (1), au-delà du galet de renvoi (8), sur la table à bandes (7).

4. Dispositif selon la revendication n° 3, caractérisé en ce que, en moins en cas de charge croisée, la voiture de four (2) est placé sur une plaque tournante (6) tournant chaque fois de 90°.

5. Dispositif selon la revendication n° 3 et/ou 4, caractérisé en ce que la table à bandes (7) et le rouleau à brosse (9) sont fixés à un dispositif (5) déplaçable horizontalement dans le sens des rangées de carreaux (3), la table à bandes (7) étant entraînée dans le sens contraire à celui de son avance.

6. Dispositif selon l'une des revendications 3 à 5, caractérisé en ce que le brin supérieur de la table à bandes (7) se déplace vers le haut sur un plan incliné et que, en aval du rouleau à brosse (9), se trouve un rouleau d'alimentation (10) qui presse les carreaux (1) contre le brin supérieur.

7. Dispositif selon la revendication n° 6, caractérisé en ce que le rouleau d'alimentation (10) consiste en un rouleau à brosse.

8. Dispositif selon la revendication n° 3, caractérisé en ce qu'un transporteur transversal (11), doté d'organes de centrage, est raccordé à la table à bandes (7).

Fig. 2

Fig. 1